# EUROPEAN PATENT SPECIFICATION

(11) **EP 0 793 291 B1**
(45) Date of publication and mention of the grant of the patent: **09.04.2003**
(21) Application number: 97102996.2
(22) Date of filing: 25.02.1997
(51) Int. Cl.: H01Q 3/26, H01Q 15/02, H01Q 25/00

(54) **Millimeter wave arrays using Rotman lens and optical heterodyne system**
Millimeterwellen-Gruppenantennen mit Rotman-Linse und optischem Überlagerungssystem
Réseaux d'antennes à ondes millimétriques avec lentille Rotman et système optique hétérodyne

(30) Priority: 28.02.1996 US 608589
(43) Date of publication of application: 03.09.1997
(73) Proprietor: Hughes Electronics Corporation, El Segundo, California 90245-0956 (US)
(72) Inventor: Lee, Jar J., Irvine, California 92720 (US); Ng, Willie W., Agoura Hills, California 91301 (US); Tangonan, Gregory L., Oxnard, California 93035 (US)
(74) Representative: Steil, Christian, Dipl.-Ing.

(56) References cited:
- EP-A- 0 504 589
- US-A- 4 641 144
- US-A- 4 736 463
- US-A- 4 929 956
- US-A- 5 128 687
- US-A- 5 333 000
- LEE J J ET AL: "MULTIBEAM ARRAY USING ROTMAN LENS AND RF HETERODYNE" IEEE ANTENNAS AND PROPAGATION SOCIETY INTERNATIONAL SYMPOSIUM 1996 DIGEST, BALTIMORE, JULY 21 - 26, 1996 HELD IN CONJUNCTION WITH THE USNC/URSI NATIONAL RADIO SCIENCE MEETI, vol. 3, 21 July 1996 (1996-07-21), pages 1612-1615, XP000755284 INSTITUTE OF ELECTRICAL AND ELECTRONICS ENGINEERSISBN: 0-7803-3217-2
- BENJAMIN R ET AL: "OPTICAL BEAM FORMING TECHNIQUES FOR PHASED ARRAY ANTENNAS" IEE PROCEEDINGS H. MICROWAVES, ANTENNAS & PROPAGATION, vol. 139, no. 6, 1 December 1992 (1992-12-01), pages 526-534, XP000355109 ISSN: 1350-2417

## Description

The present invention relates to a millimeter wave (MMW) array antenna employing an optical system to provide a radiation source and beam scan control, the array antenna comprising an optical lens having a center axis, n optical laser sources spaced around a lens transmit side for emitting light energy at a first frequency, a center optical laser source disposed at the center axis on the lens transmit side for emitting light energy at a second frequency, N optical receive elements spaced along a lens receive side for receiving optical energy emitted by the laser sources, each of the n laser sources and the center laser source having a wide field of view so as to illuminate all of the optical receive elements through the lens, N equal length optical fibers, each having a first fiber and connected to a corresponding one of the receive elements and a second end connected to a corresponding detector element, N amplifiers each having an input connected to a corresponding detector element and an output connected to a corresponding MMW radiating element of the array antenna, and selector apparatus for selecting a particular one of said n lasers to operate as an optical source, wherein the selection of the particular laser determines the beam direction generated by the array antenna.

Such a millimeter wave (MMW) array antenna is known from document "OPTICAL BEAM FORMING TECHNIQUES FOR PHASED ARRAY ANTENNAS" IEE PROCEEDINGS H. MICROWAVES, ANTENNAS & PROPAGATION, Vol. 139, No. 6, 1^{st} December 1992 (1992-12-01), pages 526-534, XP000355109 ISSN: 1350-2417.

This invention relates, in general to millimeter wave (MMW) array antennas, and more particularly to such an array antenna using a Rotman lens and optical heterodyne system.

Most conventional phased arrays use a phase shifter for each element to steer the antenna beam. At MMW it becomes impractical to control the phase settings individually, because the element spacing and tolerance are so tight that they preclude such discrete packaging approaches. Thus, for MMW arrays, it is a challenge to provide an efficient way to control the beam scan of the array.

Rotman lenses are well known in the art. Optical heterodyne techniques per se are also known.

The above-mentioned document "OPTICAL BEAM FORMING TECHNIQUES FOR PHASED ARRAY ANTENNAS" discloses an optical millimeter wave model for phase steering. According to this document, a non-coherent optical source is proposed to be used as a carrier, the light energy emitted by the non-coherent optical source being intensity-modulated at the millimeter wave frequency. The modulated signal is then focused by an optical lens to illuminate a model planar array of optical pickup elements with a plane wave. The position of the optical source, in the focal plane of the lens, determines the millimeter wave phase slope of the intensity-modulated illumination.

The functions of intensity modulating and focusing light energy are carried out sequentially, the modulation being carried out prior to the focusing, and prior to transmitting the light energy to the optical lens. The sequential order of performing these two functions is implemented by a structural separation of respective means. Light energy (for one beam) from a non-coherent optical source is processed in an optical modulator and, afterwards, fed into an optical lens.

According to this document, direct modulation of light-emitting diodes, which may be laser diodes, is limited by an upper critical frequency. Further, according to this-document, higher millimeter-wave modulation frequencies beyond the upper limit for direct modulation may be generated as the beat between the optical frequencies of two differentially tuned lasers. Generating a beat requires a coherent superposition of two waves.

Hence, the above-mentioned document discloses that a non-coherent millimeter wave modulated optical frequency signal can be generated in a separate optical modulator as the beat between the optical frequencies of two differentially tuned lasers. The resulting non-coherent millimeter wave modulated carrier signal can then be fed into an optical lens, thereby maintaining a structural separation between the functions of modulation and focusing the modulated signal in order to illuminate an array of pickup elements.

For a particular implementation (one-dimensional scan, control of fan beams), an optical Rotman lens is introduced as an alternative to utilizing two optical cylindrical lenses for illuminating the array of pickup elements. This Rotman lens is shown as receiving input from millimeter wave modulated sources, thus implying that the intensity modulation has taken place outside the lens. Conclusively, the concept of structural separation between modulation and lens-based illumination is also maintained in connection with the Rotman lens alternative.

The document US-A-5,333,000 discloses an optical-based RF beam steering system for phased-array antennas comprising a photonic integrated circuit (PIC). The system is based on optical heterodyning employed to produce microwave phase shifting by a PIC. Microwave power and control signal distribution to the antenna is accomplished by optical fiber, permitting physical separation of the PIC and its control functions from the antenna. The photonic integrated circuit (PIC) comprises a plurality of waveguides, a plurality of turning mirrors, at least one optical power splitter, and at least one phase modulator, wherein the waveguides operably connect the turning mirrors, the optical power splitter, and the phase modulator. The PIC can be divided into two sub-components, namely an optical frequency translator (OFT), and an optical phase controller. The OFT serves only the function of producing two light wave signals required for the heterodyning process. The optical phase controller is comprised of the power dividers required to produce an output for each antenna element and the optical phase shifters required for phase control.

In view of the above, it is the objective of the present invention to provide for a millimeter wave (MMW) array antenna, which provides for a more efficient way to control the beam. scan of the array in a transmit mode as well as in a receive mode.

For the transmit mode, this objective is achieved by the MMW array antenna as mentioned at the outset, wherein the optical lens is a Rotman optical lens, the first frequency is a first optical frequency (ω₂), the second frequency is a second optical frequency (ω₁), the optical system is a heterodyne system, wherein an MMW operating frequency (ω₀) of the array antenna is equal to the beat frequency (ω₂ - ω₁) between the first and second optical frequencies.

For the receive mode, this objective is achieved by the array antenna as mentioned at the outset, wherein the optical lens is a Rotman optical lens, the first frequency is a first optical frequency (ω₂), the second frequency is a second optical frequency (ω₁), the optical system is a heterodyne system, wherein an MMW operating frequency (ω₀) of the array antenna is equal to the beat frequency (ω₂ - ω₁) between the first and second optical frequencies, N amplifiers each having an input connected to a corresponding detector element and an output connected to a corresponding mixer device, N MMW receive antenna elements, N low noise amplifiers each having an input connected to a corresponding receive antenna element and an output connected to a corresponding one of the N mixer devices for mixing with a corresponding signal from a photodetector device, summing circuitry for summing output signals from each of the N mixer devices to provide a summed output.

This invention provides a solution to overcome some of the problems encountered in the conventional designs of MMW array antennas in producing the radiation source and controlling the discrete phase settings for beam scan. This is accomplished by using optical heterodyne techniques and a phase translation system between the optical and RF domain. The required phase shifts are collectively produced by wave propagation and mixing in a space-fed system. Thus, the differential phase shifts are produced in the optical frequency domain and are subsequently translated to the operating RF frequency. The advantages of this photonic feed are (1) the small size compatible with the MMW wavelength, and (2) the unique flexible form factor of the fibers for high density packaging of array antennas. Furthermore, this optical heterodyne method offers an efficient technique of signal generation and beam scan.

A millimeter wave (MMW) array antenna employing an optical heterodyne system to provide a radiation source and beam scan control includes a Rotman optical lens having a center axis, a center laser disposed at the center axis on the lens transmit side for emitting light energy at a first optical frequency, and n-1 laser sources spaced around a lens transmit side for emitting light energy at a second optical frequency. The MMW operating frequency of the array antenna is equal to the beat frequency between the first and second optical frequencies. N optical receive elements are spaced along a Rotman lens receive side for receiving optical energy emitted by the lasers. Each of the laser sources have a wide field of view so as to illuminate all of the optical receive elements through the lens.

N equal length optical fibers are employed, each having a first fiber end connected to a corresponding one of the receive elements and a second end connected to a corresponding photodetector element. Each of N amplifiers has an input connected to a corresponding second fiber end of one of the optical fibers, and an output connected to a corresponding MMW radiating element of the array antenna. A selector apparatus is provided to select a particular one or ones of the n-1 lasers to operate as an optical source, wherein the selection of the particular laser determines the beam direction generated by the array antenna.

These and other features and advantages of the present invention will become more apparent from the following detailed description of an exemplary embodiment thereof, as illustrated in the accompanying drawings, in which:
FIG. 1 is a simplified block diagram of a MMW array system embodying the invention in a transmit mode.
FIG. is a simplified block diagram of the MMW array system of FIG. 1 operating in a receive mode.
FIG. 3 is a simplified block diagram of an alternate array receiving mode system.

A millimeter wave (MMW) array antenna with an optical heterodyne system to provide the radiation source and beam scan control is disclosed as an exemplary embodiment of the invention. The array employs an optical feed system to (i) produce the MMW by mixing two laser sources, (ii) distribute the signal source to an array of radiating elements through a Rotman lens and optical fibers, (iii) generate the differential phase shift for beam scan in the optical region, (iv) change the beam direction by switching the input port, or (v) scan the beam by varying the frequency of the second laser source.

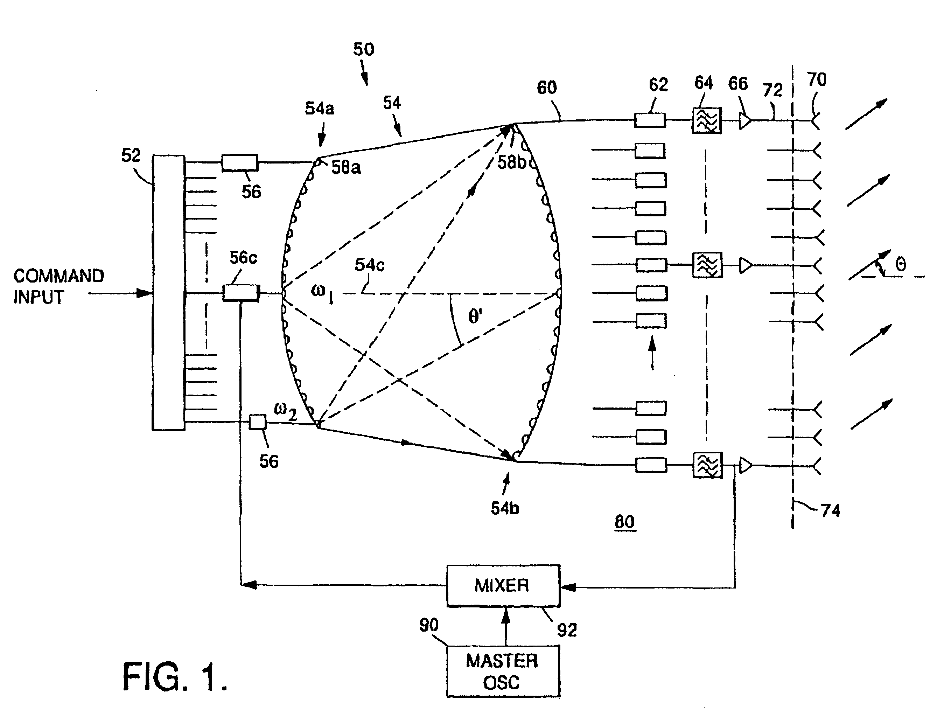

FIG. 1 is a simplified block diagram of a MMW array system 50 embodying the invention, operating in a transmit mode. The system 50 includes a 1:n switch 52, a Rotman lens 54 with n lasers 56 on the transmit side 54A of the lens and N optical receive elements 58B on the receive side 54B of the lens. The number n of lasers 56 need not be the same as, and will typically be different than, the number N of optical receive elements 58B. The Rotman lens 54 in this exemplary embodiment is a high-silica planar waveguide for light made out of a silicon substrate. The fabrication of such an optical Rotman lens is analogous to that of optical star couplers, e.g., as described in "Design and Fabrication of Integrated-Optic 8 x 8 Star Coupler," K. Okamoto et al., Electronics Letters, Volume 27, No. 9, pages 774-775, April 25, 1991.

The control input to each laser 56 is connected to an output port of the 1:n switch 52. A command input signal is provided to the input port of the switch 52 to determine which of the n lasers 56 is to be operated at any given time. (The center laser 56C is operated at all times during operation of the array system.) The output of each laser 56 is coupled to a corresponding one of the n beam input ports 58A by an optical fiber. The switch 52 could be constructed to allow more than one laser to be operated at any given time, thereby providing the capability of multiple simultaneous beam operation.

Each receive element 58B is pigtailed by an equal line length fiber 60 and terminated with a photodetector 62. The receive element 58B is preferably a receptor lenslet, such as a glass bead, to collect the incident light and direct it into the optical fiber to the photodetector. A filter 64 and an amplifier 66 may be used to filter out any unwanted signal components, such as the sum of the laser frequencies, and amplify the RF signal developed by each photodetector before it is radiated by the array element 70 coupled to each optical receive element 58 by equal length cables 72. The cables 72 are passed through an aperture ground plane 74.

Every laser 56 on the transmit side 54A, except the laser 56C located at the center axis 54C, emits an optical light signal at frequency (color) ω₂. The spacing dx of the receive elements 58B is nominally .5λ₂, i.e., the wavelength at ω₂. The size of the receiving elements 58B is selected to be such that they are touching each other to minimize spillover loss. The center axis laser 56C radiates a reference signal at frequency (color) ω1, and operates continuously, no matter which of the other lasers 56 are commanded to operate by the switch 52. The two lasers may each operate, for example, in the infrared spectrum, with their respective wavelengths differing by a desired MMW operating wavelength. Each laser light source has a wide field of view to illuminate all of the receive port elements 58B on the receive side 54B of the lens 54. The beat frequency, ω2-ω1, is the desired operating RF MMW frequency, ω₀, of the array antenna. The photodetectors 62 are designed to respond to ω₀ only, and not to the frequencies of the laser outputs.

The offset angle of any of the lasers 56 with respect to the central axis 54C is denoted θ'. The profile (curvature) of the Rotman lens 54 is usually designed in such a way that the illumination of the receiving side 54B produced by the laser 56C located at the center is quasiuniform in amplitude and phase. For the laser light source at θ', however, a quasi-linear progressive phase distribution exists across the receiving elements 58B. The differential phase shift between any two adjacent elements 58B due to this source at θ' is given by (2π/λg) dx sinθ', where λg is the guide wavelength of ω₂ in the silica waveguide. When this light is mixed with that from the center laser 56C, this phase distribution is preserved at the detectors 58B, but the resultant frequency is the beat frequency, ω₀, due to the mixing. This ω₀ is the frequency of the RF transmission.

As this linear phase front is transferred to the aperture and radiated in the direction θ from the broadside, the differential phase shift between the radiating elements is (2π/λo) Dx sinθ, where Dx is the radiating element (70) spacing, about half of the wavelength at the operating RF frequency. This phase shift is identical to that in the lens 54, equal to (2π/λg) dx sinθ'. From this condition, a relationship between the beam scan angle θ and the offset angle of the laser can be derived, which is given by$\frac{\text{sinθ}}{\text{sinθ}} \text{=} \sqrt{{\text{ε}}_{\text{r}}} \frac{{\text{ω}}_{\text{2}}}{{\text{ω}}_{\text{0}}} \frac{\text{dx}}{\text{Dx}}$

Note that the beam direction can be switched by changing the location of the laser, or by changing the frequency of the laser, ω₂, in a continuous manner.

To stabilize the RF frequency, the array 50 includes a phase lock loop (PLL) 80 driven by the master oscillator 90 at ω0. The output of the photodetector 62 is tapped to mix with the reference source 90 at RF mixer 92, and the DC output is used to tune the frequency of the laser 56C located at the center of the lens 54 at frequency ω₁.

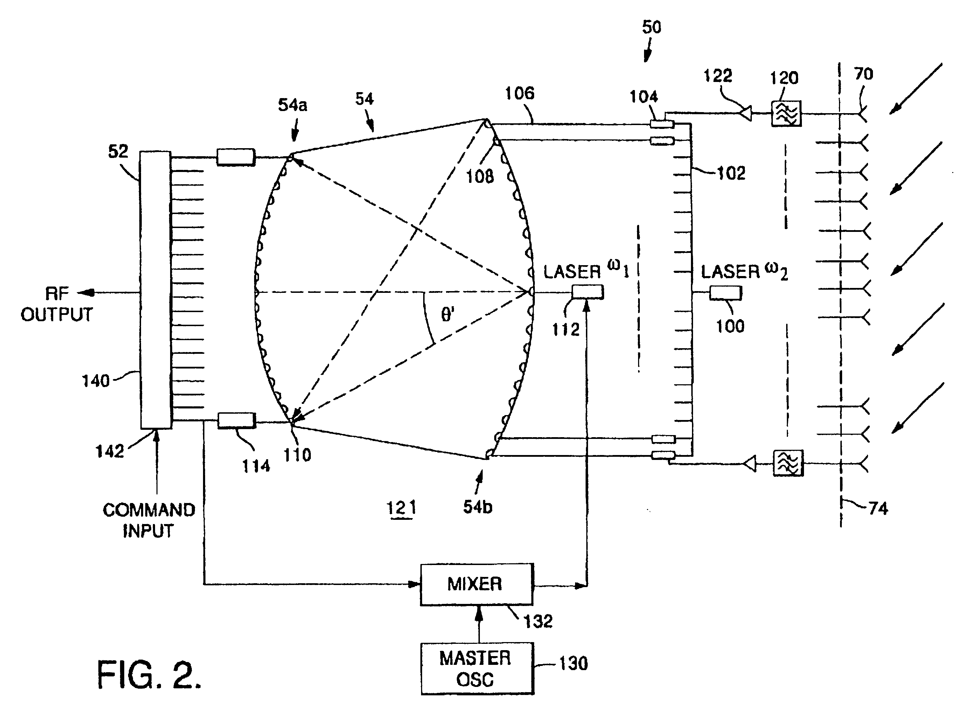

For the receive mode of the array system 50 illustrated in FIG. 2, the process is reversed. The signals received at the radiating elements 70 are filtered by filters 120 and amplified by amplifiers 122 before being connected to the modulating signal input of optical signal modulators 104. The modulators 104 can be direct modulator devices or indirect/external modulators, such as Mach-Zender modulators. As shown in FIG. 2, a single laser 100 operating at ω₂ supplies the light source to be modulated by the RF signal received at the radiating elements 70. An optical power divider 102 is used to split the light from this source into N signals, one for each array element 70 and each modulator 104. A set of equal line length fibers 106 feeds the RF modulated light to N emitters 108, which can be bead lens elements, equally spaced on the side 54B of the Rotman lens. Collectively, the light wave converges onto the optical receive elements 110, which can also comprise bead lens elements, on the side 54A displaced at the offset angle θ' determined by the above equation. Likewise, the focal point can be controlled by varying the frequency of ω₂. For detection of the RF signal, a reference laser source 112 located at the center of side 54B of the lens is used to illuminate all of the receive elements 110, so that the mixed down beat frequency ω₀ can be detected by the photodetector 114 connected to each optical receive element 110. Similarly, for stability, a phase lock loop 121 is needed to control the frequency (color) of laser 112. A portion of the photodetector 114 output is tapped away to be mixed with the reference oscillator 130 signal at mixer 132, with the mixer output used to tune the frequency of the laser 112. The outputs of the photodetectors 114 are at the MMW operating frequency of the array antenna, and are connected to the n input ports of the 1:n RF switch 140. A command input to switch control port 142 selects which one of the n photodetector output signals is to be selected as the signal appearing as the RF output. The selection of the particular photodetector will determine the selected receive bean scan angle.

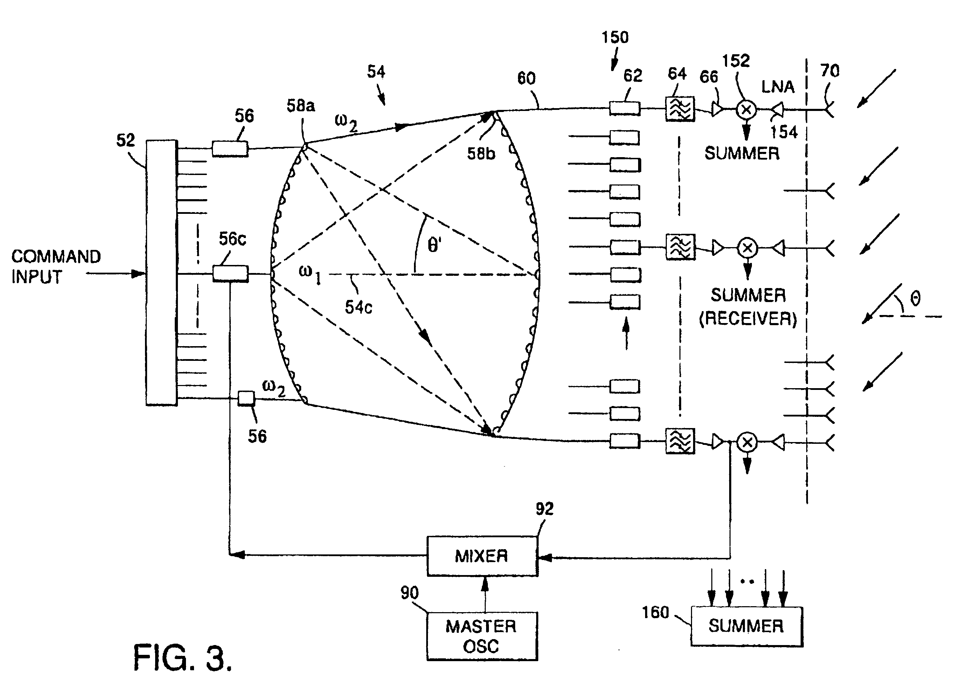

FIG. 3 illustrates an alternate embodiment of the receive mode. Here, the antenna configuration 150 is identical to the transmit system 50 of FIG. 1, and like numbers are used to identify like elements, except at the front end where a low noise amplifier (LNA) 154 and a mixer 152 are included for each radiating element 70. To receive a plane wave incident in the same direction as the transmit case, i.e., at θ as illustrated in FIG. 3, a laser located at the opposite conjugate location θ' is turned on to produce a linearly progressive phase front at frequency ω₂ distributed along the output ports of the beamforming network, i.e., at the outputs of the amplifiers 66 in the exemplary network of FIG. 3. These signals are correspondingly mixed with the incoming signals at the same frequency ω₀. The mixer will bring the information riding on ω₀ down to the base band. The outputs of the mixers 152 are all equal so that a simple summing device 160 which sums the outputs of all the mixers 152 will produce maximum output for the receiver. This receive system operates as a spatial matched filter which generates a complex conjugate response to detect the incoming wave.

In summary, the disclosed invention is a compact optical beamforming system of MMW array antennas, designed for the generation of the radiation source and the control of the beam scanning by optical heterodyne, techniques implemented with a silica Rotman lens.

## Claims

1. A millimeter wave (MMW) array antenna (50) employing an optical system to provide a radiation source and beam scan control, the array antenna (50) comprising:
an optical lens (54) having a center axis (54C);
n optical laser sources (56) spaced around a lens transmit side (54A) for emitting light energy at a first frequency;
a center optical laser source (56C) disposed at the center axis on said lens transmit side (54A) for emitting light energy at a second frequency;
N optical receive elements (58B) spaced along a lens receive side (54B) for receiving optical energy emitted by said laser sources (56);
each of said n laser sources (56) and said center laser source (56C) having a wide field of view so as to illuminate all of said optical receive elements (58B) through said lens (54);
N equal length optical fibers (60) each having a first fiber end connected to a corresponding one of said receive elements (58B) and a second end connected to a corresponding detector element (62);
N amplifiers (66) each having an input connected to a corresponding detector element (62) and an output connected to a corresponding MMW radiating element (70) of said array antenna; and
selector apparatus (52) for selecting a particular one of said n lasers (56) to operate as an optical source, wherein the selection of said particular laser (56) determines the beam direction generated by said array antenna (50);
**characterized by**
said optical lens (54) being a Rotman optical lens;
said first frequency being a first optical frequency (ω₂);
said second frequency being a second optical frequency (ω₁);
said optical system being a heterodyne system, wherein an MMW operating frequency (ω₀) of the array antenna (50) is equal to the beat frequency (ω₂ - ω₁) between the first and second optical frequencies.

2. The array antenna of claim 1, **characterized in that** said selector apparatus (52) comprises a switch apparatus (52) having a command input port for receiving a selection command and n output ports, wherein said selection command determines which of said n laser sources (56) operates at a particular instant of time to determine said beam direction.

3. The array antenna of claim 1 or 2, **characterized by** including a phase lock loop (80) for stabilizing the MMW frequency (ω₀) of the array antenna (50), comprising a master oscillator (90) for providing a reference signal operating at a desired operating MMW frequency (ω₀) of said antenna (50), mixing means (92) for mixing said reference signal with an output from one of said photodetectors (62) to provide a DC control signal connected to a control input of said center laser source (56C) to tune the output of said center laser source (56C) and thereby stabilize said MMW frequency (ω₀).

4. The array antenna of any of claims 1 - 3, **characterized in that** said Rotman lens (54) includes a planar optical waveguide formed on a silicon substrate.

5. The array antenna of any of claims 1 - 4, **characterized in that** said receive elements (58B) are spaced apart by a distance dx, and wherein said receive elements (58B) have a size dimension which is about equal to the distance dx, so that the receive elements (58B) are touching each other to minimize spillover losses.

6. The array antenna of any of claims 1 - 5, **characterized in that** said detector elements (62) do not respond to optical energy at said first or second wavelengths (ω₁, ω₂), and respond only to incident energy at said MMW operating frequency (ω₀) of the array antenna (50).

7. A millimeter wave (MMW) array antenna (150) employing an optical system to provide beam scan control, the array antenna (150) comprising:
an optical lens (54) having a center axis (54C);
n laser sources (56) spaced around a lens transmit side (54A) for emitting light energy at a first frequency;
a center laser source (56C) disposed at the center axis (54C) on said lens transmit side (54A) for emitting light energy at a second frequency,
N optical receive elements (58B) spaced along a lens receive side (54B) for receiving optical energy emitted by said laser sources (56);
each of said n laser sources (56) and said center laser source (56C) having a wide field of view so as to illuminate all of said optical receive elements (58B) through said lens (54);
N equal length optical fibers (60) each having a first fiber end connected to a corresponding one of said receive elements (58B) and a second end connected to a corresponding detector element (62);
selector apparatus (52) for selecting a particular one of said n laser sources (56) to operate as an optical source, wherein the selection of said particular laser source (56) determines the receive beam direction for said array antenna (150);
**characterized by**
said optical lens (54) being a Rotman optical lens;
said first frequency being a first optical frequency (ω₂);
said second frequency being a second optical frequency (ω₁);
said optical system being a heterodyne system, wherein an MMW operating frequency (ω₀) of the array antenna is equal to the beat frequency (ω₂ - ω₁) between the first and second optical frequencies;
N amplifiers (66) each having an input connected to a corresponding detector element (62) and an output connected to a corresponding mixer device (152);
N MMW receive antenna elements (70);
N low noise amplifiers (154) each having an input connected to a corresponding receive antenna element (70) and an output connected to a corresponding one of said N mixer devices (152) for mixing with a corresponding signal from a photodetector device (62);
summing circuitry (160) for summing output signals from each of said N mixer devices (152) to provide a summed output.

8. The array antenna of claim 7, **characterized in that** said selected laser source (56) illuminates said receive elements (58B) to produce a linearly progressive phase front distribution along outputs of said detector elements (62).

9. The array antenna of claim 7 or 8, **characterized in that** said receive beam direction is at an opposite conjugal angular position relative to said center axis (56C).

10. The array antenna of any of claims 7 - 9, **characterized in that** said receive elements (58B) are spaced apart by a distance dx, and wherein said receive elements (58B) have a size dimension which is about equal to the distance dx, so that the receive elements (58B) are touching each other to minimize spillover losses.

## Patentansprüche

1. Millimeterwellen-Arrayantenne (MMW-Arrayantenne) (50), die ein optisches System verwendet, um eine Strahlungsquelle und eine Strahl-Scansteuerung bereitzustellen, wobei die Arrayantenne (50) aufweist:
eine optische Linse (54) mit einer Mittenachse (54C);
n optische Laserquellen (56), die um eine Sendeseite (54A) der Linse herum beabstandet sind, zum Emittieren von Lichtenergie mit einer ersten Frequenz;
eine mittlere optische Laserquelle (56C), die bei der Mittenachse auf der Sendeseite (54A) der Linse angeordnet ist, zum Emittieren von Lichtenergie mit einer zweiten Frequenz;
N optische Empfangselemente (58B), die entlang einer Empfangsseite (54B) der Linse beabstandet sind, zum Empfangen von optischer Energie, die von den Laserquellen (56) emittiert ist;
wobei jede der n Laserquellen (56) und die mittlere Laserquelle (56C) ein weites Sichtfeld aufweisen, um durch die Linse (54) hindurch alle optischen Empfangselemente (58B) zu beleuchten;
N optische Fasern (60) gleicher Länge, die jeweils ein erstes Ende aufweisen, das mit einem entsprechenden Empfangselement der Empfangselemente (58B) verbunden ist, und jeweils ein zweites Ende aufweisen, das mit einem entsprechenden Detektorelement (62) verbunden ist;
N Verstärker (66), die jeweils einen Eingang aufweisen, der mit einem entsprechenden Detektorelement (62) verbunden ist, und jeweils einen Ausgang aufweisen, der mit einem entsprechenden MMW-Strahlungselement (70) der Arrayantenne verbunden ist; und
eine Auswahlvorrichtung (52) zum Auswählen eines bestimmten Lasers der n Laser (56), damit dieser als optische Quelle arbeitet, wobei die Auswahl des bestimmten Lasers (56) die Strahlrichtung bestimmt, die von der Arrayantenne (50) erzeugt wird;
**gekennzeichnet durch**
die Tatsache, dass die optische Linse (54) eine optische Rotman-Linse ist;
die Tatsache, dass die erste Frequenz eine erste optische Frequenz (ω₂) ist;
die Tatsache, dass die zweite Frequenz eine zweite optische Frequenz (ω₁) ist;
wobei das optische System ein Heterodyn-System ist, wobei eine MMW-Betriebsfrequenz (ω₀) der Arrayantenne (50) gleich der Überlagerungsfrequenz (ω₂ - ω₁) zwischen der ersten und der zweiten optischen Frequenz ist.

2. Arrayantenne nach Anspruch 1, **dadurch gekennzeichnet, dass** die Auswahlvorrichtung (52) eine Schaltvorrichtung (52) aufweist, die einen Befehlseingangsport aufweist, zum Empfangen eines Auswahlbefehls, und n Ausgangsports aufweist, wobei der Auswahlbefehl bestimmt, welche der n Laserquellen (56) zu einem bestimmten Zeitpunkt arbeitet, um die Strahlrichtung zu bestimmen.

3. Arrayantenne nach Anspruch 1 oder 2, **gekennzeichnet durch** einen Phasenregelkreis (80) zum Stabilisieren der MMW-Frequenz (ω₀) der Arrayantenne (50), mit einem Hauptoszillator (90) zum Bereitstellen eines Referenzsignals, das mit einer gewünschten MMW-Betriebsfrequenz (ω₀) der Antenne (50) arbeitet, Mischermitteln (92) zum Mischen des Referenzsignals mit einem Ausgang von einem der Photodetektoren (62), um ein Gleichstrom-Steuersignal bereitzustellen, das mit einem Steuereingang der mittleren Laserquelle (56C) verbunden wird, um den Ausgang der mittleren Laserquelle (56C) abzustimmen und hier**durch** die MMW-Frequenz (ω₀) zu stabilisieren.

4. Arrayantenne nach einem der Ansprüche 1 bis 3, **dadurch gekennzeichnet, dass** die Rotman-Linse (54) einen ebenen optischen Hohlleiter aufweist, der auf einem Siliciumsubstrat ausgebildet ist.

5. Arrayantenne nach einem der Ansprüche 1 bis 4, **dadurch gekennzeichnet, dass** die Empfangselemente (58B) um eine Distanz dx voneinander beabstandet sind und dass die Empfangselemente (58B) eine Größenabmessung aufweisen, die etwa gleich der Distanz dx ist, so dass die Empfangselemente (58B) einander berühren, um Überlauf-Verluste zu minimieren.

6. Arrayantenne nach einem der Ansprüche 1 bis 5, **dadurch gekennzeichnet, dass** die Detektorelemente (62) nicht auf optische Energie mit der ersten oder der zweiten Wellenlänge (ω₁, ω₂) ansprechen und lediglich auf einfallende Energie mit der MMW-Betriebsfrequenz (ω₀) der Arrayantenne (50) ansprechen.

7. Millimeterwellen-Arrayantenne (MMW-Arrayantenne) (150), die ein optisches System verwendet, um eine Strahl-Scansteuerung bereitzustellen, wobei die Arrayantenne (150) aufweist:
eine optische Linse (54), die eine Mittenachse (54C) aufweist;
n Laserquellen (56), die um eine Sendeseite (54A) der Linse herum beabstandet sind, zum Emittieren von Lichtenergie mit einer ersten Frequenz;
eine mittlere Laserquelle (56C), die bei der Mittenachse (54C) auf der Sendeseite (54A) der Linse angeordnet ist, zum Emittieren von Lichtenergie mit einer zweiten Frequenz;
N optische Empfangselemente (58B), die entlang einer Empfangsseite (54B) der Linse beabstandet sind, zum Empfangen von optischer Energie, die von den Laserquellen (56) emittiert ist;
wobei jede der n Laserquellen (56) und die mittlere Laserquelle (56C) ein weites Sichtfeld aufweisen, um alle optischen Empfangselemente (58B) durch die Linse (54) hindurch zu beleuchten;
N optische Fasern (60) gleicher Länge, die jeweils ein erstes Faserende aufweisen, das mit einem entsprechenden Empfangselement der Empfangselemente (58B) verbunden ist, und jeweils ein zweites Ende aufweisen, das mit einem entsprechenden Detektorelement (62) verbunden ist;
eine Auswahlvorrichtung (52) zum Auswählen einer bestimmten Laserquelle der n Laserquellen (56), so dass diese als eine optische Quelle arbeitet, wobei die Auswahl der bestimmten Laserquelle (56) die Empfangsstrahlrichtung für die Arrayantenne (150) bestimmt;
**gekennzeichnet durch**
die Tatsache, dass die optische Linse (54) eine optische Rotman-Linse ist;
die Tatsache, dass die erste Frequenz eine erste optische Frequenz (ω₂) ist;
die Tatsache, dass die zweite Frequenz eine zweite optische Frequenz (ω₁) ist;
wobei das optische System ein Heterodyn-System ist, wobei eine MMW-Betriebsfrequenz (ω₀) der Arrayantenne gleich der Überlagerungsfrequenz (ω₂ - ω₁) zwischen der ersten und der zweiten optischen Frequenz ist;
N Verstärker (66), die jeweils einen Eingang aufweisen, der mit einem entsprechenden Detektorelement (62) verbunden ist, und jeweils einen Ausgang aufweisen, der mit einer entsprechenden Mischereinrichtung (152) verbunden ist;
N MMW-Empfangsantennenelemente (70);
N rauscharme Verstärker (154), die jeweils einen Eingang aufweisen, der mit einem entsprechenden Empfangsantennenelement (70) verbunden ist, und jeweils einen Ausgang aufweisen, der mit einer entsprechenden Mischereinrichtung der N Mischereinrichtungen (152) verbunden ist, zum Mischen mit einem entsprechenden Signal von einer Photodetektor-Einrichtung (62);
einen Summierschaltkreis (160) zum Summieren von Ausgangssignalen von jeder der N Mischereinrichtungen (152), um einen summierten Ausgang bereitzustellen.

8. Arrayantenne nach Anspruch 7, **dadurch gekennzeichnet, dass** die ausgewählte Laserquelle (56) die Empfangselemente (58B) beleuchtet, um entlang von Ausgängen der Detektorelemente (62) eine linear progressive Phasenfrontverteilung zu erzeugen.

9. Arrayantenne nach Anspruch 7 oder 8, **dadurch gekennzeichnet, dass** die Empfangsstrahlrichtung bei einer entgegengesetzten konjugierten Winkelposition relativ zu der Mittenachse (56C) liegt.

10. Arrayantenne nach einem der Ansprüche 7 bis 9, **dadurch gekennzeichnet, dass** die Empfangselemente (58B) voneinander um eine Distanz dx beabstandet sind und dass die Empfangselemente (58B) eine Größenabmessung aufweisen, die etwa gleich der Distanz dx ist, so dass die Empfangselemente (58B) einander berühren, um Überlauf-Verluste zu minimieren.

## Revendications

1. Antenne-réseau (50) à ondes millimétriques (MMW) employant un système optique pour procurer une source de rayonnement et une commande de balayage de faisceau, l'antenne-réseau (50) comprenant :
une lentille optique (54) ayant un axe central (54C);
n sources lasers optiques (56) espacées autour d'une face d'émission de lentille (54A) pour émettre de l'énergie lumineuse à une première fréquence;
une source laser optique centrale (56C) disposée sur l'axe central de la face d'émission de lentille (54A) pour émettre de l'énergie lumineuse à une seconde fréquence;
N éléments de réception optiques (58B) espacés le long d'une face de réception de lentille (54B) pour recevoir l'énergie optique émise par les sources lasers (56);
chacune des n sources lasers (56) et la source laser centrale (56C) ayant un large champ d'émission de façon à illuminer tous les éléments de réception optiques (58B) à travers la lentille (54);
N fibres optiques (60) de longueur égale ayant chacune une première extrémité de fibre connectée à l'un correspondant des éléments de réception (58B) et une seconde extrémité connectée à un élément détecteur (62) correspondant;
N amplificateurs (66) ayant chacun une entrée connectée à un élément détecteur (62) correspondant et une sortie connectée à un élément rayonnant (à ondes millimétriques) correspondant (70) de l'antenne-réseau; et
un dispositif sélecteur (52) pour sélectionner l'un particulier des n lasers (56) pour fonctionner comme une source optique, la sélection du laser (56) particulier déterminant la direction de faisceau que génère l'antenne-réseau (50);
**caractérisée en ce que**
la lentille optique (54) est une lentille optique de Rotman;
la première fréquence est une première fréquence optique (ω₂) ;
la seconde fréquence est une seconde fréquence optique (ω₁) ;
le système optique étant un système hétérodyne, dans lequel une fréquence de fonctionnement MMW (ω₀) de l'antenne-réseau (50) est égale à la fréquence de battement (ω₂ - ω₁) entre les première et seconde fréquences optiques.

2. Antenne-réseau selon la revendication 1, **caractérisée en ce que** le dispositif sélecteur (52) comprend un dispositif de commutation (52) ayant un accès d'entrée d'ordre pour recevoir un ordre de sélection, et n accès de sortie, dans laquelle l'ordre de sélection détermine laquelle des n sources lasers (56) fonctionne à un instant particulier, pour déterminer la direction de faisceau.

3. Antenne-réseau selon la revendication 1 ou 2, **caractérisée en ce qu'**elle comprend une boucle d'asservissement de phase (80) pour stabiliser la fréquence MMW (ω₀) de l'antenne-réseau (50), comprenant un maître-oscillateur (90) pour fournir un signal de référence à une fréquence de fonctionnement MMW désirée (ω₀) de l'antenne (50), des moyens de mélange (92) pour mélanger le signal de référence avec un signal de sortie de l'un des photodétecteurs (62) pour produire un signal de commande à courant continu appliqué à une entrée de commande de la source laser centrale (56C), pour accorder la sortie de la source laser centrale (56C) et stabiliser ainsi la fréquence MMW (ω₀).

4. Antenne-réseau selon l'une quelconque des revendications 1 à 3, **caractérisée en ce que** la lentille de Rotman (54) comprend un guide d'ondes optique plan formé sur un substrat en silicium.

5. Antenne-réseau selon l'une quelconque des revendications 1 à 4, **caractérisée en ce que** les éléments de réception (58B) sont mutuellement espacés d'une distance dx, et dans laquelle les éléments de réception (58B) ont une dimension de taille qui est approximativement égale à la distance dx, de façon que les éléments de réception (58B) se touchent mutuellement pour minimiser les pertes de débordement.

6. Antenne-réseau selon l'une quelconque des revendications 1 à 5, **caractérisée en ce que** les éléments détecteurs (62) ne réagissent pas à de l'énergie optique aux première ou seconde longueurs d'onde (ω₁, ω₂), et réagissent seulement à de l'énergie incidente à la fréquence de fonctionnement MMW (ω₀) de l'antenne-réseau (50).

7. Antenne-réseau (150) à ondes millimétriques (MMW) employant un système optique pour produire une commande de balayage de faisceau, l'antenne-réseau (150) comprenant :
une lentille optique (54) ayant un axe central (54C);
n sources lasers (56) espacées autour d'une face d'émission de lentille (54A), pour émettre de l'énergie lumineuse à une première fréquence;
une source laser centrale (56C) disposée sur l'axe central (54C) de la face d'émission de lentille (54A) pour émettre de l'énergie lumineuse à une seconde fréquence;
N éléments de réception optiques (58B) espacés le long d'une face de réception de lentille (54B) pour recevoir de l'énergie optique émise par les sources lasers (56);
chacune des n sources lasers (56) et la source laser centrale (56C) ayant un large champ d'émission de façon à illuminer tous les éléments de réception optiques (58B) à travers la lentille (54);
N fibres optiques (60) de longueur égale, ayant chacune une première extrémité de fibre connectée à l'un correspondant des éléments de réception (58B) et une seconde extrémité connectée à un élément détecteur correspondant (62);
un dispositif sélecteur (52) pour sélectionner l'une particulière des N sources lasers (56) pour fonctionner comme une source optique, la sélection de la source laser particulière (56) déterminant la direction de faisceau de réception pour l'antenne-réseau (150);
**caractérisée par**
**le fait que** la lentille optique (54) est une lentille optique de Rotman;
**le fait que** la première fréquence est une première fréquence optique (ω₂);
**le fait que** la seconde fréquence est une seconde fréquence optique (ω₁);
**le fait que** le système optique est un système hétérodyne, dans lequel une fréquence de fonctionnement MMW (ω₀) de l'antenne-réseau est égale à la fréquence de battement (ω₂ - ω₁) entre les première et seconde fréquences optiques;
N amplificateurs (66), ayant chacun une entrée connectée à un élément détecteur correspondant (62), et une sortie connectée à un dispositif mélangeur correspondant (152);
N éléments d'antenne MMW de réception (70);
N amplificateurs à faible bruit (154) ayant chacun une entrée connectée à un élément d'antenne de réception (70) correspondant et une sortie connectée à l'un correspondant des N dispositifs mélangeurs (152) pour effectuer un mélange avec un signal correspondant provenant d'un dispositif photodétecteur (62);
un circuit de sommation (160) pour faire la somme des signaux de sortie provenant de chacun des N dispositifs mélangeurs (152), pour fournir un signal de sortie sommé.

8. Antenne-réseau selon la revendication 7, **caractérisée en ce que** la source laser (56) sélectionnée illumine les éléments de réception (58B) pour produire une distribution de front de phase linéairement progressive le long de sorties des éléments détecteurs (62).

9. Antenne-réseau selon la revendication 7 ou 8, **caractérisée en ce que** la direction de faisceau de réception est dans une position angulaire conjuguée opposée par rapport à l'axe central (56C).

10. Antenne-réseau selon l'une quelconque des revendications 7 à 9, **caractérisée en ce que** les éléments de réception (58B) sont mutuellement espacés d'une distance dx, et dans laquelle les éléments de réception (58B) ont une dimension de taille qui est approximativement égale à la distance dx, de façon que les éléments de réception (58B) se touchent mutuellement pour minimiser les pertes par débordement.
